(19) Europäisches Patentamt

European Patent Office

Office européen des brevets

(11) **EP 1 296 286 A1**

(12) **DEMANDE DE BREVET EUROPEEN**

(43) Date de publication:
**26.03.2003   Bulletin 2003/13**

(51) Int Cl.$^7$: **G06T 7/20**, G01R 33/563

(21) Numéro de dépôt: **02078318.9**

(22) Date de dépôt: **12.08.2002**

(84) Etats contractants désignés:
**AT BE BG CH CY CZ DE DK EE ES FI FR GB GR
IE IT LI LU MC NL PT SE SK TR**
Etats d'extension désignés:
**AL LT LV MK RO SI**

(30) Priorité: **14.08.2001  FR 0110808**

(71) Demandeur: **Koninklijke Philips Electronics N.V.
5621 BA Eindhoven (NL)**

(72) Inventeur: **Allouche, Cyril
75008 Paris (FR)**

(74) Mandataire: **Chaffraix, Jean
Société Civile S.P.I.D.
156, Boulevard Haussmann
75008 Paris (FR)**

(54) **Procédé permettant de suivre la déformation sur trois dimensions d'un organe déformable**

(57)     L'invention concerne un procédé d'obtention d'une déformation en trois dimensions d'un organe déformable dans le temps et s'étendant dans un espace à trois dimensions à partir d'au moins deux ensembles de données [DS(t1), DS(t2)] représentant des points dudit organe et correspondant à des moments distincts [t1, t2] de la déformation de l'organe. Une correspondance [SEL(t1,t2)] entre les points des ensembles de données étant déterminée [COR], ledit procédé utilise une définition [DEF] de plans fictifs [Pi] sur lesquels sont définies des équations explicites [EQi] de la déformation de l'organe incluant des paramètres inconnus [PARi(t1,t2)]. Les paramètres [PARi(t1,t2)] sont calculés [CAL] pour chaque équation [EQi] et les équations explicites [EQi] obtenues sont ensuite utilisées [EXT] pour définir la déformation dans l'espace à trois dimensions [DEF3D (t1,t2)] par l'intermédiaire de fonctions de poids définies pour les points de l'espace.

FIG.1

EP 1 296 286 A1

## Description

L'invention concerne un procédé d'obtention d'une déformation en trois dimensions d'un organe déformable dans le temps et s'étendant dans un espace à trois dimensions à partir d'au moins deux ensembles de données représentant des points dudit organe et correspondant à des moments distincts de la déformation de l'organe. Cette invention concerne aussi un appareillage pour mettre en oeuvre le procédé décrit ci-dessus.

L'invention trouve son application dans le domaine du traitement d'images médicales. De multiples modalités d'acquisition peuvent en effet bénéficier de l'application du procédé selon l'invention dès lors qu'entre deux acquisitions de l'organe, des points d'une première acquisition peuvent être mis en correspondance avec des points d'une deuxième acquisition. Ainsi en utilisant des algorithmes connus de recalage, le procédé peut être mis en oeuvre pour des images obtenues par techniques ultrasonores, radiologiques ou encore de résonance magnétique. En particulier les images d'organe marqué par modulation spatiale de résonance magnétique permettent d'obtenir la déformation d'un organe sur un plan d'acquisition de manière très fidèle. En effet ce marquage est visible sur les images sous la forme de lignes de marquage ayant des points d'intersection. Les lignes de marquage se déforment en suivant la déformation de l'organe. Lesdits points d'intersection sont alors choisis comme points pour lesquels une correspondance est connue.

Un procédé d'obtention de la déformation en trois dimensions d'un organe est déjà connu de l'état de la technique par la publication de Park et al. intitulée "Analysis of left ventricular motion based on volumetric deformable models and MRI-SPAMM", Medical Image Analysis 1(1) : 53-71 (1996). Dans ce document, Park propose une méthode de reconstruction du mouvement en 3 dimensions du ventricule gauche du coeur à partir de données marquées par modulation spatiale de résonance magnétique. La technique présentée utilise des volumes paramétrés dont les paramètres sont à déterminer en fonction des données marquées. Pour utiliser des volumes paramétrés, il est nécessaire de faire une première convergence d'un modèle de maillage régi par des lois mécaniques, les données images produisant des forces, pour déterminer les frontières de l'organe puis ensuite faire une approche de la déformation du maillage optimisée par rapport aux positions des tags. Les calculs engendrés par cette méthode sont lourds et par conséquent la méthode peut difficilement être automatisée en temps réel. Par ailleurs, les paramètres de déformation sont calculés une fois la seconde convergence de déformation du maillage réalisée et cela provoque des propagations d'erreurs à chaque étape de calcul.

Un but de l'invention est de fournir un procédé pour quantifier la déformation de l'organe avec une très bonne précision et avec des calculs allégés qui permettent de faire une étude en temps réel. Cette dernière propriété est primordiale pour l'usage clinique d'une détermination d'un mouvement en trois dimensions.

En effet, un procédé conforme au paragraphe introductif est remarquable selon l'invention en ce qu'il comprend des étapes de :

- détermination, dans un des ensembles de données, d'un ensemble de points de l'organe pour lesquels une correspondance avec un point d'un autre ensemble de données est connue, ledit ensemble de points étant nommé sélection,
- définition d'au moins deux plans perpendiculaires entre eux dans l'espace à trois dimensions, et d'équations explicites sur lesdits plans comprenant des paramètres inconnus de la déformation de l'organe sur lesdits plans,
- calcul desdits paramètres inconnus pour chacune des équations explicites sur chacun des plans en utilisant les correspondances connues pour les points de la sélection,
- extrapolation des équations explicites de la déformation connues sur lesdits plans à l'ensemble des points dudit organe en utilisant une pondération spatiale des équations explicites sur les plans perpendiculaires entre eux.

Lorsque le procédé est appliqué à des acquisitions en modulation spatiale de résonance magnétique, l'étape de détermination desdits paramètres d'une expression mathématique explicite sur chacun des plans est avantageusement réalisée selon une technique exposée dans la demande de brevet Français n° 0100881 du 23.01.2001 pour une détermination de la déformation en deux dimensions. Les plans définis dans l'étape de définition des plans sont alors choisis pour correspondre aux plans d'acquisition. Lorsque d'autres techniques d'acquisition sont utilisées, des équations explicites telles que présentées dans la demande de brevet n° 0100881 sont avantageusement utilisées pour définir l'expression de la déformation sur des plans de référence fictifs définis dans l'étape de définition. Ces plans peuvent être définis automatiquement ou par l'utilisateur. Il en est de même pour les équations explicites.

Quelle que soit la modalité choisie, les paramètres de l'équation explicite sont à chaque fois définis à partir de la sélection c'est-à-dire des correspondances de points et de leurs positions.

L'avantage de travailler sur des plans permet de diminuer de manière très importante la quantité de calcul, la complexité algorithmique étant en $N^2$ fois le nombre de plans, plutôt qu'en $N^3$. Un autre avantage est de pouvoir programmer plus efficacement des contraintes sur le mouvement. Les équations explicites selon l'invention sont des équations continues sur le plan et le calcul d'approche de la déformation subit ainsi une contrainte de continuité. Cette contrainte de continuité est maintenue dans le mouvement 3D. Cette approche permet d'estimer le mouvement au sens très rigoureux des moindres carrés avec une régularisation mathématique explicite. Cette régularisation corrige le bruit. Cette correction est particulièrement utile dans le cas où la correspondance et donc le déplacement des points de la sélection est approximatif. C'est un avantage majeur par rapport à la technique exposée dans l'état de la technique cité qui utilise une approche volumique subissant les erreurs ponctuelles dans la correspondance des points. L'emploi de contraintes permet de tenir compte de connaissances a priori, et d'une interaction éventuelle avec l'utilisateur. Celui-ci peut en effet vouloir contraindre le mouvement à respecter à certains endroits ce qu'il peut entrer manuellement dans la définition des plans et des équations, avec un degré variable de précision.

L'invention s'applique particulièrement au coeur qui présente entre autres une déformation en rotation et en contraction. L'expression mathématique sera alors avantageusement choisie comme pouvant exprimer des déformations proches de celles attendues pour l'organe imagé.

L'invention concerne aussi un appareillage pour mettre en oeuvre le procédé selon l'invention qui comprendra des moyens d'extraction des paramètres de l'expression mathématique de la déformation en trois dimensions et des moyens de visualisation, notamment en trois dimensions de l'évolution de ces paramètres au cours de la séquence.

L'invention sera mieux comprise à la lumière de la description suivante de quelques modes de réalisation, faite à titre d'exemples non limitatifs et en regard des dessins annexés, dans lesquels :

- la figure 1 représente un diagramme schématique d'une mise en oeuvre préférée du procédé selon l'invention,
- la figure 2 représente schématiquement les plans de référence nécessaires à la mise en oeuvre de l'invention,
- la figure 3 représente un appareillage de traitement de données selon une mise en oeuvre particulière de l'invention,
- la figure 4 représente un appareil de saisie et de traitement de données selon l'invention.

Le procédé selon l'invention est applicable sur des ensembles de données appartenant à une séquence d'au moins deux ensembles de données DS(t1) et DS(t2) pris à deux instants t1 et t2.
Ces deux ensembles de données représentent un organe ou une partie d'un organe amené à se déformer dans le temps et sont généralement présentés sous la forme d'images. Les ensembles de données disponibles seront en fait de sortes différentes selon la modalité d'acquisition de l'organe. Ces modalités d'acquisition définissent plusieurs modes de réalisation.

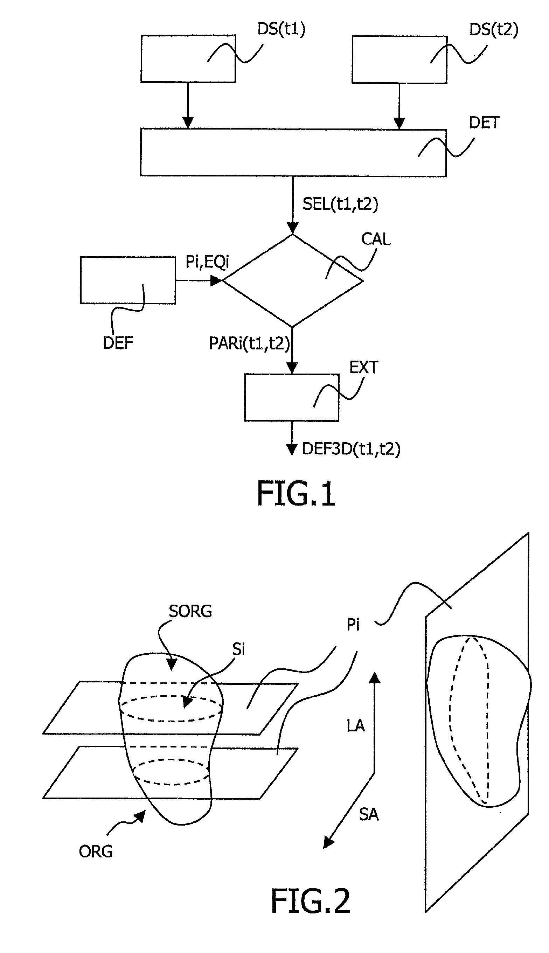

La figure 1 représente un diagramme schématique d'une mise en oeuvre d'un procédé selon l'invention. Dans un premier mode de réalisation préféré, les ensembles de données sont liées à un plan de l'organe observé sur une séquence d'une certaine durée. C'est le cas d'un organe imagé selon une modulation spatiale de résonance magnétique. Le procédé suivant l'invention traite les ensembles de données où sont disponibles des points pour lesquels il est possible d'établir des correspondances d'un ensemble de données à un autre. Dans le cas de la modulation spatiale de résonance magnétique, les lignes de marquage sont telles qu'il existe des points d'intersection entre plusieurs lignes de marquage. Il est aisé d'établir des correspondances d'une image à l'autre pour ces points d'intersection. Les correspondances entre les points sont établies dans une étape COR de détermination d'un ensemble de points pour lesquels une correspondance avec un point d'un autre ensemble de données est connue.
Cette étape de détermination des correspondances COR peut utiliser par exemple un procédé tel que décrit dans la demande de brevet Européen n°00403028.4 du 31 octobre 2000 incluse par référence. L'ensemble de points obtenu est alors dénommé sélection SEL(t1,t2). Dans un autre mode de réalisation, la modalité permet d'avoir une connaissance de la position de certains points dans un espace à trois dimensions, c'est le cas par exemple des ultrasons et des rayons X (Tomographie) qui permettent de connaître la position d'une interface entre deux tissus différents dans l'espace. Les points seront alors localisés sur la surface réelle SORG (Figure 2) de l'organe imagé (par exemple par triangulation de la surface...). Ces modalités permettent donc de placer un certain nombre de points mais sans qu'il soit aisé de connaître les correspondances entre des points appartenant à deux ensembles de données différents correspondant à deux instants différents. Les techniques connues pour réaliser des recalages de surfaces ne permettent pas une précision suffisante pour connaître le mouvement à partir de technique de calcul de la déformation tel que celui proposé par Park. En effet, la technique de Park consistant à faire une approche volumique de l'organe, tout point erroné sur la surface SORG devient une source d'erreur dans le calcul de la déformation. L'invention, quant à elle, permet de déterminer la déformation de l'organe de manière précise en utilisant un processus de recalage en combinaison avec le procédé de détermination de la déformation en trois dimensions selon l'invention. Usuellement pour déterminer la déformation du tissu il est indispensable de passer par une étape de recalage pour retrouver un point organique (i.e. correspondant à un point réel de l'organe observé) d'un ensemble de données à un autre. Classiquement l'algorithme de recalage utilisé est un algorithme de mise en correspondance, par exemple, ICP (Iterative Closest Point, tel que défini par exemple dans : « A method for registration of 3D shapes », IEEE Trans. On Pattern Analysis and Machine Intelligence, 14(2) :239-256, février 1993, P.Besl et N.McKay), qui permet d'avoir le point correspondant le plus probable.

En parallèle de cette étape de détermination des correspondances COR, une étape de définition DEF de plans Pi et d'équations EQi sur chaque plan Pi est réalisée. En se référant à la figure 2, les plans Pi sont choisis au sein de l'espace dans lequel l'organe ORG est imagé. Quelle que soit la technique d'acquisition utilisée, les plans de référence sont au moins au nombre de deux, perpendiculaires entre eux. Dans le mode de réalisation préféré, au moins certains plans de coupe de référence Pi correspondent avantageusement aux plans d'acquisition car les points de la sélection sont localisés sur des surfaces Si appartenant aux plans d'acquisition. Dans le cas du coeur, qui sera l'organe imagé dans la suite de la description, il est communément défini un grand axe LA et un petit axe SA (figure 2). Ainsi, les directions grand axe et petit axe du ventricule gauche pour l'acquisition duquel l'invention peut être utilisée sont prises au sens radiologique, et rigoureusement perpendiculaires. Classiquement lors de l'étude en modulation spatiale de résonance magnétique, au moins deux plans petit axe, aux niveaux base et apex, et au moins un plan grand axe sont disponibles. Pour les autres modalités d'acquisition, au moins deux plans petit axe et au moins un plan grand axe seront ainsi avantageusement définis dans l'étape de définition DEF. Dans l'étape de définition DEF, des équations explicites sont définies en parallèle sur les plans définis auparavant.

Dans le cas du coeur, d'une part, à chaque plan grand axe est affectée une équation explicite ayant la forme d'une transformation affine du plan :

$$T(x,y)=M.X+B, \quad X=(x,y),$$

M matrice 2x2, B vecteur translation
Cette équation explicite rend bien compte des mouvements du coeur dans son grand axe. Ces mouvements sont en effet de complexité relativement faible. Les paramètres inconnus sont ceux constitutifs de la matrice M et du vecteur de translation B qui sont des paramètres réels.

D'autre part, à chaque plan petit axe est affectée une transformation radiale, telle que définie dans la demande de brevet FR n°0100881 du 23.01.2001. Dans le cas du coeur une telle équation dérivée d'une équation de similitude est particulièrement bien adaptée aux mouvement de rotation et de contraction de cet organe. Un point central C étant choisi, dans le plan complexe :

$$f(z)=|z-z_c|(\Sigma_{k=-N..N\backslash 0} \, a_k e^{ik\theta}) + d$$

Les paramètres inconnus sont identiques à ceux énoncés dans la demande de brevet Français n°0100881, c'est-à-dire ak, k=-N...N et d (les ak et d étant des nombres complexes). Globalement les paramètres inconnus sont notés PARi(t1,t2) pour chaque plan Pi. Un modèle de mouvement linéairement paramétré est alors obtenu sur l'ensemble des plans. Le calcul des paramètres inconnus PARi(t1,t2) de ce modèle relève alors des résultats disponibles soit sur des plans d'acquisition soit par méthodes de recalage. La linéarité permet des algorithmes numériques extrêmement efficaces, ainsi que l'emploi aisé de contraintes sur les paramètres. Ainsi, les résultats obtenus avec les algorithmes de recalage sont fortement améliorés par contrainte selon l'invention par des équations explicites EQi sur des plans de coupe de référence Pi choisis.

Ensuite, au sein d'une étape CAL, recevant d'une part les données relatives à la sélection SEL(t1,t2) et d'autre part les données relatives aux plans Pi et aux équations explicites EQi définies sur ces plans en provenance des étapes COR et DEF, les paramètres inconnus PARi(t1,t2) des équations explicites EQi sont déterminés pour chacune des équations explicites EQi.

Dans le mode de réalisation préféré, concernant les ensembles de données pour lesquels l'acquisition est réalisée sur des plans d'acquisition, les paramètres PARi (t1,t2) sur les plans d'acquisition sont directement déterminés selon une approximation aux moindres carrés ainsi que décrit dans la demande de brevet Français n°0100881 en utilisant par exemple une détermination des positions des points selon la demande de brevet Européen n°00403028.4.

Ainsi que dans cette demande de brevet, les paramètres PARi(t1,t2) sur chaque plan d'acquisition sont surdéterminés car le nombre de points sur les plans est élevé.

Dans l'autre mode de réalisation, concernant la détermination des paramètres PARi(t1,t2) pour les autres modalités, des plans fictifs Pi étant définis dans l'espace et des équations explicites EQi étant définies sur ces plans Pi, les points de la sélection SEL(t1,t2), disséminés dans l'espace permettent de calculer les paramètres des équations explicites sur lesdits plans.

Comme vu précédemment, le mouvement observé de chaque point de la sélection est défini à l'aide d'un algorithme de recalage et est utilisé dans une expression du mouvement du point définie comme une somme pondérée des déformations sur les plans fictifs de référence. Cette somme pondérée est définie par exemple selon les expressions proposées dans la suite de la description. Le nombre généralement important de points disponibles sur la surface observée (triangulation...) permet d'obtenir des paramètres PARi(t1,t2) surdéterminés. Le procédé selon l'invention permet donc de lisser la déformation par un passage artificiel sur des plans fictifs. Ici encore, le calcul des paramètres est avantageusement réalisé par approximation aux moindres carrés. Dans le cas d'une modalité pour laquelle les points de la sélection sont disséminés dans l'espace, l'utilisation des fonctions de poids sur la sélection SEL(t1,t2) combinée aux équations explicites EQi sur les plans de référence Pi permet de déterminer les paramètres inconnus des équations explicites. Les expressions paramétrées sont alors obtenues uniquement sur les plans fictifs.

Un des principes clef de l'invention est un passage du n * 2D au 3D dans une étape d'extrapolation EXT. Nous allons maintenant décrire ce passage en détail. L'espace géométrique est décomposé en une infinité de coupes grand axe et petit axe, et l'interpolation des ∞ * 2D déformations est réalisée à partir de celles des plans de références par l'utilisation d'une moyenne pesée. L'infinie continuité des fonctions de poids assure une grande continuité dans l'espace 3D. Pour reconstruire un mouvement 3D à partir des mouvements 2D attachés à chacun des plans de référence (lesquels étant fictifs quand l'acquisition ne se fait pas sur des plans), il convient d'interpoler ces différents mouvements dans tout l'espace, de manière à ce que le mouvement résultant soit continu et différentiable. Des fonctions de poids détaillées ci-dessous sont alors introduites. L'obtention du mouvement 3D se fait alors ainsi : chaque point de cote z subit le mouvement petit axe calculé comme la somme pondérée par la valeur de ces fonctions de poids en z de tous les mouvements petit axe de référence. De même, si son angle cylindrique est $\phi$, son mouvement grand axe est calculé par la somme pondérée des mouvements grand axe.

Soient $\phi_1 .. \phi_n$ les angles cylindriques des plans grand axe. Alors, à chaque plan i, la fonction de poids est par exemple associée :

$$P_i(\phi) = \Pi_{j \neq i} ((\phi - \phi_j) / (\phi_i - \phi_j)) \ [2\pi]$$

En présence d'un seul plan de référence grand axe, il est pris comme étant le plan i=1 et aucun poids n'est utile pour ce plan. La fonction de poids est alors égale à un et la transformation est toujours la même quel que soit le plan d'angle cylindrique $\phi$ sur lequel l'interpolation est réalisée.

Soient $z_1 <.. <z_k$ les cotes des plans de coupe petit axe. A chaque plan i≠1,k, on associe la fonction de poids :

$$Q_i(z) = \Pi_{j \neq i} ((z - z_j) / (z_i - z_j))$$

Pour i=1, on reprend la même définition pour $z > z_1$, et $Q_1(z)=1$ pour $z <= z_1$
Pour i=k, même définition pour $z < z_k$, =1 pour $z >= z_k$
Soit un point quelconque M de coordonnées cylindriques r,$\phi$,z. Il suit donc le mouvement :

$$U(M) = (\Sigma \ P_i(\phi)T_i(M)). \ e_z e_z + (\Sigma Q_i(z)f_i(M)) \quad (1)$$

Où $e_z$ est le vecteur unitaire des cotes.
La définition des fonctions de poids fait que ce mouvement est continu et infiniment différentiable. Le développement de U(M) par rapport aux paramètres $M_i, B_i, a_k^j, d_j$ (i : plans grand axe, j : petit axe) permet d'obtenir une expression du mouvement 3D qui est linéaire en ces coefficients.

Au bilan, au cours d'une dernière étape d'extrapolation EXT les expressions explicites EQi dont les paramètres PARi(t1,t2) ont été déterminés sont étendues à l'espace en utilisant les équations explicites des déformations obtenues sur les plans de référence et en utilisant les fonctions de poids et l'expression du mouvement U(M) en chaque point. Etant donné que la déformation est connue suivant au moins deux plans perpendiculaires, la déformation est accessible dans la totalité de l'espace par extrapolation. Dans le cas d'un calcul de la déformation à partir de données disséminées dans l'espace, les erreurs sur les recalages de points sont ainsi lissées par le passage artificiel à un calcul sur des plans.

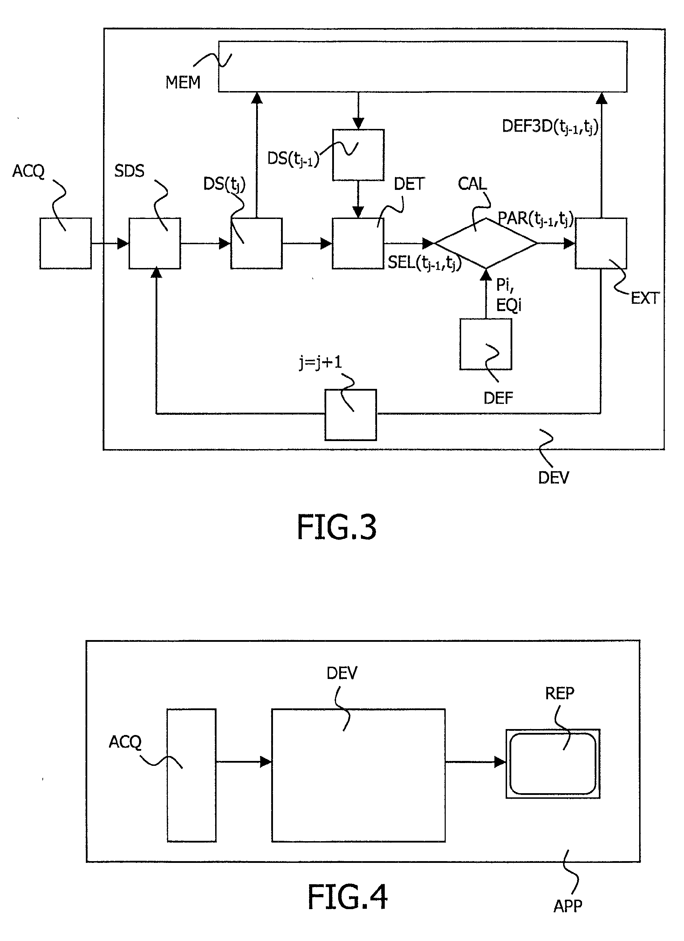

La figure 3 représente un appareillage selon une mise en oeuvre particulière de l'invention. Cet appareillage est en relation avec des moyens de saisie ACQ de séquences SDS de X ensembles de données DS. Dans la mise en oeuvre particulière représentée sur la figure 3, le procédé décrit dans la figure 1 pour deux ensembles de données DS(t1) et DS(t2) successifs ou non est itéré sur l'ensemble des ensembles de données successives DS($t_j$) de la séquence SDS. Après une initialisation pour un compteur initialisé à j=0, le processus décrit ci-après est amorcé. Un ensemble de données DS($t_j$) est extrait de la séquence SDS. Des moyens de détermination de correspondances COR reçoivent en entrées deux ensembles de données DS(tj) et DS(tj-1). Pour les besoins de l'invention, les ensembles de données DS sont stockés dans une mémoire MEM.

L'étape de détermination des correspondances COR permet de connaître une sélection SEL(tj-1,tj).

En parallèle de la détermination de la sélection, des moyens de définition DEF définissent des plans de référence Pi dans l'espace de l'organe et des équations explicites EQi sur ces plans Pi.

Des moyens de calcul CAL reçoivent en entrée, d'une part la sélection SEL(tj-1,tj) et d'autre part, les équations définies EQi sur les plans Pi choisis. Cette étape CAL permet d'obtenir en sortie, les paramètres PARi(tj-1,tj) des équations explicites EQi jusque là inconnus. Une étape d'extrapolation à l'espace en trois dimensions est alors effectuée par des moyens d'extrapolation EXT qui donnent la déformation dans l'espace de chaque point de l'organe DEF3D(tj-1,tj). Cette déformation est avantageusement stockée dans la mémoire. Le compteur est incrémenté à j=j+1. L'itération de la détermination de la déformation sur une séquence SDS permet d'évaluer les paramètres de la déformation et leur évolution dans le temps.

La connaissance de ces paramètres en trois dimensions est importante pour la détection des anomalies dans le comportement de l'organe par un praticien. L'invention permet en particulier de pouvoir travailler sans initialiser un maillage, n'importe quelle triangulation pouvant servir pour l'invention sans avoir à effectuer de traitement dessus. Ainsi il est possible de travailler avec des maillages obtenus sur des acquisitions donnant de bons contours mais originairement ne permettant pas de calcul de la déformation. Cela permet de compléter une approche utilisant des images de modulation spatiale de résonance magnétique qui donnent une bonne connaissance des déformations mais avec une faible reconnaissance des contours. Le modèle et les équations selon l'invention étant explicites, un calcul direct, donc très rapide, est réalisable en combinaison avec les algorithmes itératifs de détermination des correspondances. Cela représente un des avantages majeurs de l'invention. Les paramètres du mouvement sont en effet directement approchés sans approche d'une grandeur intermédiaire (par exemple la déformation d'un maillage) qui introduirait des erreurs.

La figure 4 représente un appareil APP de saisie d'images, ledit appareil comprenant des moyens ACQ d'acquisition de séquences d'au moins deux ensembles de données d'un organe ou d'une partie d'un organe amené à se déformer dans le temps, des moyens REP de représentation visuelle de ces images, qui peut comprendre un mode vidéo pour suivre la déformation au cours de la séquence, un appareillage DEV de traitement d'images tel que décrit auparavant.

Il existe de nombreuses façons de mettre en oeuvre les fonctions présentées dans les étapes des procédés selon l'invention par des moyens logiciels et/ou matériels accessibles à l'homme du métier. C'est pourquoi les figures sont schématiques. Ainsi, bien que les figures montrent différentes fonctions réalisées par différents blocs, cela n'exclut pas qu'un seul moyen logiciel et/ou matériel permette de réaliser plusieurs fonctions. Cela n'exclut pas non plus qu'une combinaison de moyens logiciels et/ou matériels permettent de réaliser une fonction.

Bien que cette invention ait été décrite en accord avec les modes de réalisation présentés, un homme du métier reconnaîtra immédiatement qu'il existe des variantes aux modes de réalisation présentés et que ces variantes restent dans l'esprit et sous la portée de la présente invention.

## Revendications

1. Procédé d'obtention d'une déformation en trois dimensions d'un organe déformable dans le temps et s'étendant dans un espace à trois dimensions à partir d'au moins deux ensembles de données représentant des points dudit organe et correspondant à des moments distincts de la déformation de l'organe, ledit procédé comprenant les étapes de :

- détermination, dans un des ensembles de données, d'un ensemble de points de l'organe pour lesquels une correspondance avec un point d'un autre ensemble de données est connue, ledit ensemble de points étant nommé sélection,

- définition d'au moins deux plans perpendiculaires entre eux dans l'espace à trois dimensions, et d'équations explicites sur lesdits plans comprenant des paramètres inconnus de la déformation de l'organe sur lesdits plans,

- calcul desdits paramètres inconnus pour chacune des équations explicites sur chacun des plans en utilisant les correspondances connues pour les points de la sélection,

- extrapolation des équations explicites de la déformation connues sur lesdits plans à l'ensemble des points dudit organe en utilisant une pondération spatiale des équations explicites sur les plans perpendiculaires entre eux.

2. Procédé selon la revendication 1, **caractérisé en ce que** la sélection est un ensemble de points dont les correspondances sont connues à l'aide d'un algorithme itératif déterminant les correspondances entre les points d'un ensemble de données et un autre ensemble de données.

3. Procédé selon la revendication 1, **caractérisé en ce que** la sélection est un ensemble de points appartenant à des plans d'acquisition définis par la technique d'acquisition de l'organe, lesdits plans d'acquisition étant alors les plans sur lesquels sont définies les équations explicites.

4. Procédé selon l'une des revendications 1 et 3, **caractérisé en ce que** ledit organe est marqué par modulation spatiale de résonance magnétique, ledit marquage se déformant en suivant la déformation de l'organe et étant tel qu'il existe des points du marquage repérables d'un ensemble de données à un autre, la sélection incluant alors lesdits points repérables.

5. Appareillage, ayant des moyens pour recevoir ou générer des données, destiné à exploiter au moins deux ensembles de données représentant des points d'un organe déformable dans le temps et s'étendant dans un espace à trois dimensions en vue de l'obtention d'une déformation en trois dimensions dudit organe, lesdits ensembles de données correspondant à des moments distincts au cours de la déformation de l'organe, ledit appareillage comprenant des moyens de :

- détermination d'un ensemble de points de l'organe dont les positions sont définies au sein de chacun des ensembles de données, ledit ensemble de points étant nommé sélection,

- définition de plans dans l'espace à trois dimensions, certains de ces plans étant parallèles entre eux, les autres plans leur étant perpendiculaires, et d'équations explicites à paramètres inconnus de la déformation sur lesdits plans,

- calcul desdits paramètres inconnus pour chacun des plans en utilisant la sélection,
- extrapolation des équations explicites de la déformation connues sur lesdits plans à l'ensemble des points dudit organe.

6. Appareillage selon la revendication 5, **caractérisé en ce qu'**il comprend des moyens de détermination à l'aide d'un algorithme itératif des correspondances entre les points d'un ensemble de données à l'autre, les points pour lesquels les correspondances sont déterminées définissant la sélection.

7. Appareillage selon la revendication 5, **caractérisé en ce qu'**une technique d'acquisition de l'organe permet de recevoir ou générer des données sous la forme de points appartenant à des plans d'acquisition, définis selon la modalité d'acquisition de l'organe, lesdits plans d'acquisition étant alors les plans sur lesquels sont définies les équations explicites.

8. Appareillage selon l'une des revendications 5 et 7, **caractérisé en ce que** ledit organe est marqué par modulation spatiale de résonance magnétique, ledit marquage se déformant en suivant la déformation de l'organe et étant tel qu'il existe des points du marquage repérables d'un ensemble de données à un autre, la sélection incluant alors lesdits points repérables.

9. Appareillage de traitement d'images selon l'une des revendications 5 à 8, comprenant en outre des moyens pour itérer sur plusieurs ensembles de données, le procédé décrit pour deux ensembles de données dans l'une des revendications 1 à 4, lesdits ensembles de données correspondant à des moments distincts de la déformation de l'organe.

10. Produit programme d'ordinateur comprenant des portions/moyens/instructions de code de programme pour l'exécution des étapes du procédé selon l'une des revendications 1 à 4 lorsque ledit programme est exécuté sur un ordinateur.

## FIG.1

## FIG.2

ACQ    SDS    DS($t_j$)    DS($t_{j-1}$)    DET    CAL    PAR($t_{j-1}$,$t_j$)

MEM

DEF3D($t_{j-1}$,$t_j$)

SEL($t_{j-1}$,$t_j$)

EXT

Pi, EQi

j=j+1

DEF

DEV

**FIG.3**

ACQ    DEV    REP

APP

**FIG.4**

EP 1 296 286 A1

**Office européen des brevets** **RAPPORT DE RECHERCHE EUROPEENNE**

Numéro de la demande

EP 02 07 8318

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 92 03089 A (UNIV PENNSYLVANIA) 5 mars 1992 (1992-03-05) * page 35, ligne 17 - page 36, ligne 2 * | 1-10 | G06T7/20 G01R33/563 |
| X | JINAH PARK ET AL: "Deformable models with parameter functions for left ventricle 3-D wall motion analysis and visualization" COMPUTERS IN CARDIOLOGY 1995 VIENNA, AUSTRIA 10-13 SEPT. 1995, NEW YORK, NY, USA,IEEE, US, 10 septembre 1995 (1995-09-10), pages 241-244, XP010154404 ISBN: 0-7803-3053-6 * le document en entier * | 1,5 | |

|  |  |  | **DOMAINES TECHNIQUES RECHERCHES (Int.Cl.7)** |
|---|---|---|---|
|  |  |  | G06T G01R |

Le présent rapport a été établi pour toutes les revendications

| Lieu de la recherche | Date d'achèvement de la recherche | Examinateur |
|---|---|---|
| LA HAYE | 6 décembre 2002 | Chateau, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**
EP 02 07 8318

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-12-2002

| Document brevet cité au rapport de recherche | Date de publication | Membre(s) de la famille de brevet(s) | | Date de publication |
|---|---|---|---|---|
| WO 9203089 A | 05-03-1992 | US | 5217016 A | 08-06-1993 |
| | | AU | 8523291 A | 17-03-1992 |
| | | CA | 2089764 A1 | 18-02-1992 |
| | | EP | 0543928 A1 | 02-06-1993 |
| | | HU | 63547 A2 | 28-09-1993 |
| | | JP | 3179784 B2 | 25-06-2001 |
| | | JP | 6500035 T | 06-01-1994 |
| | | KR | 222143 B1 | 01-10-1999 |
| | | WO | 9203089 A1 | 05-03-1992 |
| | | IE | 921115 A1 | 21-10-1992 |
| | | IL | 99625 A | 14-05-1996 |

EPO FORM P0460

Pour tout renseignement concernant cette annexe : voir Journal Officiel de l'Office européen des brevets, No.12/82